# EUROPEAN PATENT APPLICATION

(11) **EP 4 570 714 A1**
(43) Date of publication of application: **18.06.2025**
(21) Application number: 23215481.5
(22) Date of filing: 11.12.2023
(51) Int. Cl.: B65G 43/02, B25J 9/16, F16P 3/00, F16P 3/14, G05B 9/02, G05B 19/4061, G06Q 10/08

(54) **SAFETY ZONING**

(71) Applicant: MOVU, 9160 Lokeren (BE)
(72) Inventor: MOUWS, Steven, 9150 Bazel (BE)
(74) Representative: IP HILLS NV

(57) **Abstract**

A safety zoning system and method for establishing a secured access for personnel entering a primary safety zone of multiple safety zones of an automated warehouse by messaging at least one automated material handling system to halt automated operation in the at least primary safety zone and in adjacent safety zones to said primary safety zone in which said automated material handling system may pose a risk to said personnel in case of continued operation.

## Description

### Field of the Invention

The present invention generally relates to a safety system comprising a safety zoning system for executing safety critical operations and to provide safe access to personnel during interventions in an automated warehouse wherein robotic shuttles operate.

### Background of the Invention

Automated warehouses and automated warehouse shuttle systems are generally known. Warehouses include relatively large storage structures, generally structured along a plurality of substantially parallel lanes. The storage structures are arranged to provide storage locations to goods, often palletized goods. Said storage locations may be provided on a plurality of levels within the storage structure. In order to automate delivery and pick up of goods to and from said storage locations, automated warehouses can include an automated warehouse shuttle system. Said shuttle systems generally include a track system including at least one pair of rails arranged in a substantially horizontal plane along a lane of the warehouse, or more generally speaking, at least one pair of rails along each of the lanes of the warehouse, which are generally arranged substantially in parallel to each other, and more preferably, a pair of rails per level and per lane of the warehouse. Transverse aisles may connect said substantially parallel lanes, which transverse aisles may or may not be provided with tracks. Additionally, lift systems may allow connections between various levels of the storage structure.

Ensuring safety in an automated warehouse where robotic shuttles operate at high speeds is crucial to protect service personnel and maintain a secure working environment in case of an intervention. Several techniques and safety measures may be implemented to mitigate risks, such as for instance collision avoidance systems, speed limiting and monitoring, emergency stop buttons, human presence detection, supplemented with training, education, regular maintenance and inspections. However not all of these techniques ensure a guaranteed mitigation for all risks of a collision with a moving shuttle. Moreover do some of the technical mitigations have a considerable impact on the performance of the warehousing system, which is not desirable.

In conventional automated warehouse systems which are operated in an automated manner with regard to storage and retrieval of storage goods by means of robotic shuttles there are only a few possibilities to avoid standstills of the warehouse system if one of the shuttles needs to be maintained (e.g., repaired) manually on the spot, or in a case where a storage good gets stuck in one of the racks and needs to be repositioned or removed manually.

When one of said shuttles needs servicing, the shuttle can generally be moved to a servicing area outside of an operational area of the shuttle system, but it may happen that a shuttle is broken and cannot be moved automatically out of the system. In other situations, goods or goods carriers, such as pallets, may be broken or may have fallen off their storage location and may hinder normal warehouse operations. A human intervention may then be necessary at the location of hindrance. Given the lack of solid floors on many or all levels, in particular in storage lanes, and given the potential heights of such storage structures in warehouses, it may be relatively difficult and dangerous for a human to reach the location of hindrance where a human intervention is needed. Moreover, material for reparation often needs to be taken along, which is relatively difficult in combination with safety measures for working at heights.

It is therefore an aim of the present invention to solve or at least partly alleviate the above-mentioned problems. In particular, the present invention aims at providing a safety system for an automated warehouse which ensures safety for service personnel entering the warehouse in case of a need for an intervention in a safety zone. The safety system also intends to limit the impact on the automated operations in the warehouse during the intervention.

### Summary of the Invention

To this aim, there is provided a safety zoning system for establishing a secured access for personnel entering a primary safety zone of multiple safety zones of an automated warehouse according to the features of claim 1. In particular, the safety zoning system establishes the secured access for the personnel in a primary safety zone by messaging at least one automated material handling system to halt automated operation in the at least primary safety zone and in adjacent safety zones to said primary safety zone in which said automated material handling system may pose a risk to said personnel in case of continued operation, the safety zoning system comprising at least one access control module associated with said one of multiple safety zones configured to monitor an entry event of said personnel into said safety zone, and configured to communicate with a zoning safety module upon detection of such an entry event, an access consolidation module configured: to store safety zone definitions for said multiple safety zones, said safety zone definitions comprising information regarding physical associations of access control modules with said safety zones and information regarding interaction risks of said automated material handling system when operating in said primary safety zone on personnel safety in said adjacent safety zones, to respond to queries requesting said safety zone configuration data, a zoning safety module, configured to communicate with said access control module, query said access consolidation module for said safety zone definitions to identify a primary safety zone which is entered by said personnel based on said entry event, messaging at least one automated material handling system to halt automated operation in at least said primary safety zone.

The safety zoning system of the invention assumes that the automated warehouse to which it is applied comprises a number of safety zones. A safety zone has to be understood as a delineated zone in an automated warehouse which defines an area that is accessible in its entirety for personnel once access has been obtained. The safety zone may be physically closed or secured by means of fixed access barriers such as walls or fences, or removable access barriers such as doors, gates or alike, but may also be delineated by virtual borders such as light grids or alike. Access to a safety zone may be restricted by disallowing any access, or by requiring some form of authorization in combination with authentication before access is granted to the safety zone. In the context of this invention, access to a safety zone is at least monitored by an access control module which is configured to detect an entry of a person to the safety zone.

While a safety zone delineates an area that is accessible in its entirety for personnel once access has been obtained, the safety zone may not restrict the movements of the automated material handling systems such as a robotic shuttle or an automated elevator. Robotic shuttles may travel during normal operation of the automated warehouse from one safety zone to another without restriction. Similarly may automated elevators travel between levels of the warehouse and across different safety zones, for instance in case that the different levels of the warehouse correspond to different safety zones.

By definition, different safety zones are non-overlapping, so it is not possible for a person to be present in two safety zones at the same time. Additionally, it is not possible for a person to move freely between safety zones without detection by an access control module. Access from one safety zone to another always requires moving through or passing at least one access or access point that is monitored by an access control module. Access control modules may be installed at an outer boundary of the automated warehouse, or at the boundaries between different safety zones.

In the context of the invention a primary safety zone is the safety zone to which a person gained access and that is identified by detecting an access reported by an access control module on the boundary of the safety zone in question. A primary safety zone is the safety zone where a person is currently present. The primary safety zone may be located next to other safety zones, some of which are adjacent to the primary safety zone, others may be farther away and not share boundaries with it. In case that a person moves from the primary safety zone to another safety zone, the entry to the new safety zone will by definition be detected by an access control module, as the access control module delineates the boundary between the two safety zones. In this case, the newly entered safety zone will become the primary safety zone of the invention.

The safety zoning system supervises the occupancy status of each safety zone, by monitoring the statuses of the access control modules. The safety zoning system at least monitors the entry events reported by access control modules upon entry of a person to a safety zone. In a preferred embodiment, an entry of a person into a safety zone, which is the primary safety zone, is detected by an access control module that reports the entry to the zoning safety module. An access control module therefore reports an entry to a safety zone by means of communicating at least a unique identifier or UID to the zoning safety module. The zoning safety module queries the access consolidation module with the received unique identifier or UID that identifies the access control module that reported the entry to the safety zone. The access consolidation module stores the safety zone definitions for said multiple safety zones, linking the unique identifiers of the access control modules with the safety zones. A query to the access consolidation module using the unique identifier as a parameter returns the identification of the safety zone that has been accessed by the person.

The access control module of the invention is a device that is positioned at an access to any of the safety zones that can be accessed by a person. In the context of this invention, the access control module is at least able to detect an entry of a person to the safety zone and communicate this entry by reporting it to the zoning safety module. Different types of access control modules may be applied such as light curtains, pressure mats, magnetic sensors integrated into a door or gate, or alike. The access control module may also be configured to perform other functions such as for instance detecting an exit of a person from said safety zone.

Access control modules, such as electronic access control modules, may also perform other functions such as providing authentication services or providing an authorisation to enter a protected zone, such as a safety zone. An authentication of a person's identity refers to the process by which a person or system verifies that they are who they say they are. An electronic access control module may to that extent require a unique key, or keycard to be presented in combination with a passkey or a biometric scan, before access is granted to the protected zone. Moreover may an electronic access control module validate the authorisation for an access of the person to the protected zone. In other words, may the access control module verify whether the identified person has proper access rights to enter the protected zone. In the end may the access control modules manage and operate the physical access to the safety zone by means of operating latches, locks, mechanical doors and barriers or alike.

The access consolidation module of the invention is a module that stores safety zone definitions for the automated warehouse. The safety zone definitions are a set of structured data that define a number of characteristics of the components and structure of the automated warehouse. These data may be stored in a table or database, and may be queried, such that the access consolidation module may be embodied as a database server. The access consolidation module is advantageous in that a safety zoning configuration of a warehouse may be implemented by configuring the safety zoning definitions rather then to implement a tedious rule-based logic that manages the safety zoning of the warehouse with its specific configuration.

The safety zone definitions comprise at least the characteristics of the installed access control modules in the automated warehouse and their associations with the different safety zones. At least the different the locations of the different access control modules should be stored as part of the safety zone definitions. The access control modules should be identified with a unique identifier or UID, and should be stored together with their relationships to the safety zones on whose boundaries they are installed. Since access control modules may be installed between two safety modules and may provide access control between two safety zones, multiple associations between access control modules and safety zones may exist.

Other characteristics of the access control modules may be stored as well, such as for instance the type of access control module, and the supported functionalities may be stored.

The zoning safety module of the invention is an active component of the zoning safety system that is configured to perform a number of functions. Firstly, the zoning safety module listens for incoming messages from the access control modules, which are triggered in case that a safety zone is accessed by a person. Two cases may arise here: an unauthorized access is detected when a breach of a zone is detected, or personnel enters a zone via a controlled access or an authorized access. In both cases will the access control module communicate with the zoning safety module by communicating at least its unique identifier or UID.

Upon such an entry event will the zoning safety module in a second instance query the access consolidation module with the received unique identifier as a parameter with a request to identify the primary safety zone which is entered by the person. In a case that a person first enters the automated warehouse through an outside access, the access control module will only be associated with a single safety zone, such that no doubt can arise about which safety zone has been accessed. An access control module that is associated with multiple safety zones can only be associated to an access between safety zones, and never with an outside access of the warehouse.

The zoning safety module operates independently from the management system that manages the normal operations of the warehouse. Under normal operations, the automated material handling systems independently execute their operating instructions which they receive from an independent module that operates as a traffic controller. The traffic controller module instructs the automated material handling systems by providing consecutive travel destinations and the instructions to be executed at these destinations. The traffic control module of the automated warehouse sends these instructions to the driving logic modules of the individual automated material handling systems. The driving logic module interprets the instructions received from the traffic controller and converts the high-level instruction into an actual path to the destination. The driving logic therefore is always aware of the location of the automated material handling system.

Since the zoning safety module operates independently from the management system, it sends its instructions independently to the automated material handling systems. In case of an entry event, the zoning safety module promptly communicates with all automated material handling systems that are present in the warehouse as soon as the primary safety zone is identified. The zoning safety module instructs the automated material handling systems to interrupt all automated operations in the identified primary safety zone. The communication is received by an on-board safety module of the automated material handling system which processes the interruption request independently from the driving logic module that manages the normal operations. In case that the on-board safety module decides that the automated material handling system is located in the primary safety zone, it will overrule the driving logic module and interrupt the normal operations of the automated material handling system in question, and optionally may provide specific instructions to evacuate the primary safety zone as soon as possible. The on-board safety module thus advantageously processes the instructions from the zoning safety module independently from the driving logic module, which ensures that the on-board safety module takes priority over the driving logic module.

In another embodiment of the invention, a further improvement to the safety zoning system is provided, wherein the zoning safety module is further configured to query the access consolidation module for said safety zone definitions to identify interaction risks of said automated material handling system between said primary safety zone and any of said multiple safety zones, messaging at least one automated material handling system to halt automated operation in said primary safety zone and any of said multiple safety zones wherein said interaction risks of said automated material handling system are identified.

The safety zone definitions therefore also may comprise the relationships between the different safety zones, such as for instance the interconnectivity between the different safety zones and their spatial organisation. The relevant aspects with regards to potential physical interactions with moving automated material handling systems may also be stored herein. For example: information whether or not safety zones are adjacent to each other, information whether or not safety zones are positioned above or below each other, information whether goods or parts may drop deeper than a single floor when falling, or information regarding the types of goods that are stored on the racks such as liquids or solids in a safety zone.

In a preferred embodiment of the invention may the interaction risks or interaction risk factor for each safety zone with respect to another safety zone be stored in a configuration table or risk table. The risk table stores the information indicating the risk of physical interaction of an automated material handling system operating in one safety zone with a person that is present in another safety zone. The safety zoning system can decide, based on the information in this risk table, in which safety zones beyond the primary safety zone automated activity should be interrupted in order to avoid any harmful interaction risk. For instance, in case that a primary safety zone is identified where an entry of a person took place, the safety zoning system may query the access consolidation module and request whether the operations in any adjacent safety zones should be interrupted as a consequence of the interruption In the primary safety zone.

This embodiment is advantageous in that based on the detection of an entry of a person into the primary safety zone, the zoning safety module may instruct the automated material handling systems to interrupt their normal operations in safety zones beyond the primary safety zone. This will increase the overall safety for any personnel present in the primary safety zone, and reduce the overall risk.

A preferred embodiment of the invention, the automated material handling system of the invention is a robotic shuttle that may carry goods in an automated way within the lanes of the warehouse. Such an automated warehouse includes at least one storage lane along a first direction and at least one transit lane along a second direction transverse to the first direction. In general, such a warehouse can include a plurality of storage lanes configured to store goods, which lanes are substantially in parallel to each other. The warehouse can further include a plurality of transit lanes which are also substantially in parallel to each other, and which are substantially transverse to said storage lanes. The storage lanes and the transit lanes may extend over a plurality of levels of the automated warehouse. At least one first track extends along the at least storage lane, and at least one second track extends along the at least one transit lane. In case the at least one storage lane and/or the at least one transit lane extend over a plurality of levels, the at least one storage lane can include a plurality of first tracks, each first track extending along the storage lane on a different level. Analogously, the at least one transit lane may include a plurality of second tracks, each second track extending along said transit lane on a different level.

In another preferred embodiment of the invention, the automated material handling system of the invention is an elevator which moves a carrier between different levels, and which is configured to move robotic shuttles between the levels of the warehouse.

In another embodiment, the access consolidation module may recalculate the risk table based on a warehouse wide risk parameter. The warehouse wide risk parameter may for instance define whether the warehouse stores any liquid goods, or for instance explosive or highly toxic goods. Storing liquid goods may have consequences for the risk of leaking product from higher levels in the warehouse down to the lowest floor. In case that this parameter would be set, the risk table could recalculated to change the risk relationship between safety zones on higher levels on safety zones on lower levels in the warehouse.

This aspect of the invention is advantageous in that the safety zone definitions stored in the access consolidation module may be updated automatically, or be recalculated, when a warehouse wide risk parameter is adapted. This avoids the need for a manual reconfiguration of the warehouse configuration.

The embodiments of the systems and methods described herein may be implemented in hardware or software, or a combination of both. However, preferably, these embodiments are implemented in computer programs executing on programmable computers each comprising at least one module component which comprises at least one processor (e.g. a microprocessor), a data storage system (including volatile and non-volatile memory and/or storage elements), at least one input device, and at least one output device. For example and without limitation, the programmable computers (referred to here as computer systems) may be a personal computer, laptop, personal data assistant, and cellular telephone, smart-phone device, tablet computer, and/or wireless device. Program code is applied to input data to perform the functions described herein and generate output information. The output information is applied to one or more output devices, in known fashion.

Each program is preferably implemented in a high level procedural or object oriented programming and/or scripting language to communicate with a computer system. However, the programs can be implemented in assembly or machine language, if desired. In any case, the language may be a compiled or interpreted language. Each such computer program is preferably stored on a storage media or a device (e.g. ROM or magnetic diskette) readable by a general or special purpose programmable computer, for configuring and operating the computer when the storage media or device is read by the computer to perform the procedures described herein. The subject system may also be considered to be implemented as a computer-readable storage medium, configured with a computer program, where the storage medium so configured causes a computer to operate in a specific and predefined manner to perform the functions described herein.

The present invention can be implemented as a computer program product adapted to carry out the steps as set out in the description. The computer executable program code adapted to carry out the steps set out in the description can be stored on a computer readable medium.

Specific examples and preferred embodiments are set out in the dependent claims. Further advantages and embodiments of the present invention will become apparent from the following description and drawings.

### Brief Description of the Drawings

Fig. 1 is a schematic overview of the safety zoning system of the invention;
Fig. 2 is a schematic overview of a portion of the safety zoning system of the invention in interaction with an automated material handling system.

### Detailed Description of Embodiment(s)

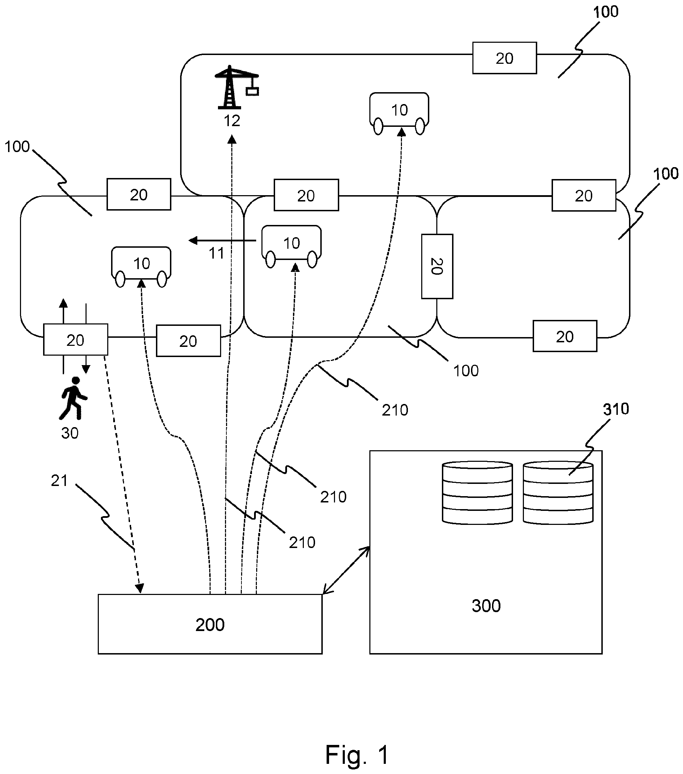

Figure 1 shows a schematic overview of the safety zoning system of the invention according to claim 1. The safety zoning system comprises a zoning safety module 200 and an access consolidation module 300. The automated warehouse to which the safety zoning system is applied is represented by a number of safety zones 100. In the drawing four safety zones 100 are represented. The safety zones 100 delineate areas that are accessible in their entirety for personnel once access has been obtained, the safety zone may not restrict the movements 11 of the automated material handling systems such as a robotic shuttle 10 or an automated elevator 12. Robotic shuttles may travel during normal operation of the automated warehouse from one safety zone to another 11 without restriction. A safety zone 100 is accessible for a person 30 by an access comprising an access control module 20. Some of the safety zones 100 are positioned adjacent to each other, and access for a person from one safety zone to another adjacent safety zone may be arranged by an access that is shared between the two concerned safety zones.

When a person 30 enters a safety zone, the access control module 20 will detect the entry and will send a message 21 to the zoning safety module 200 reporting the event. The message 21 sent by the access control module 20 comprises a unique identifier or UID that uniquely identifies the access control module.

In a next step, the zoning safety module 200 will send a request the access consolidation module 300 that stores the safety zone definitions 310 for the automated warehouse. These safety zone definitions at least comprise the associations between the access control module 20 and the concerned safety zone 100 whose access it monitors for entry events. Upon such an event will the access control module 20 send a message 21 to the zoning safety module 200, that in its turn will query the access consolidation module 300 to report the primary safety zone. The primary safety zone is the safety zone to which a person gained access and that is identified by detecting an access reported by an access control module on the boundary of the safety zone in question.

The zoning safety module 200 promptly communicates with the robotic shuttles 10 and elevators 12 that are present in the warehouse as soon as the primary safety zone is identified. The communication is performed by means of sending a message 210 from the zoning safety module 200 to all automated material handling systems 10, 12. The communication may thus be considered to be a broadcast to all automated material handling systems 10, 12. The zoning safety module 200 instructs the automated material handling systems to interrupt all automated operations in the identified primary safety zone.

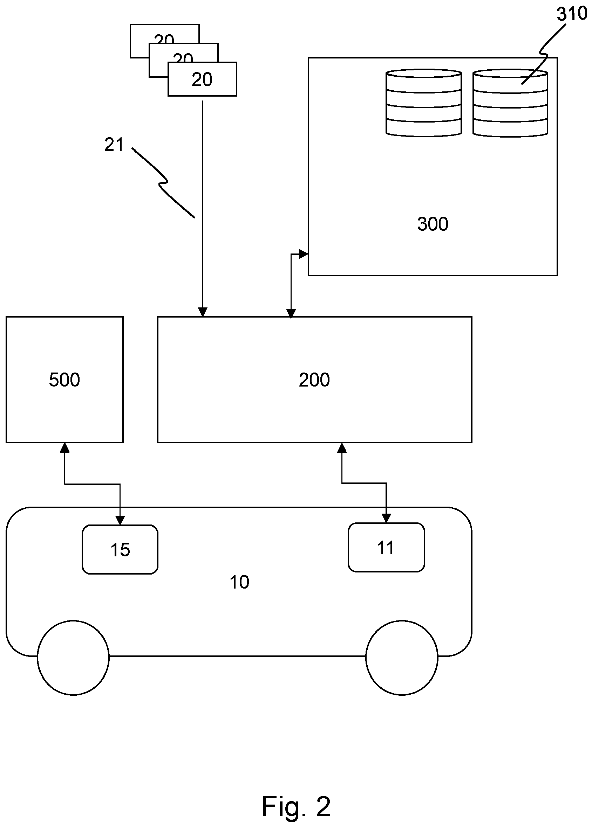

Figure 2 is a schematic overview of the safety zoning system comprising the zoning safety module 200 and the access consolidation module 300 of the invention in interaction with an automated material handling system, which is here depicted as a robotic shuttle 10.

Such a robotic shuttle 10 receives its operating instructions for normal operation from a traffic control module 500 that is part of the automated warehouse. The operating instructions are received by the driving logic module 15 of the robotic shuttle 10. The driving logic module 15 is an onboard module of a robotic shuttle that is configured to interpret high-level instructions received from the traffic control module 500 relating to an ordered movement from a pick-up or picking location to a destination, and relating to instruction relating to loading and unloading of goods in the warehouse. The detailed path from an origin to a destination is calculated by this driving logic module, and may be take various aspects into account, such as the presence of other robotic shuttles, movements between different levels in the warehouse, ...

Any instructions coming from the zoning safety module 200 are received and interpreted by the onboard safety module 11. This onboard safety module operates independently from the driving logic module 15, and more importantly takes precedence over any commands processed by the driving logic module 15. This architecture guarantees that no conflicts can occur between both modules, and that the commands from the zoning safety module 200 would be ignored and cause a risk to a human.

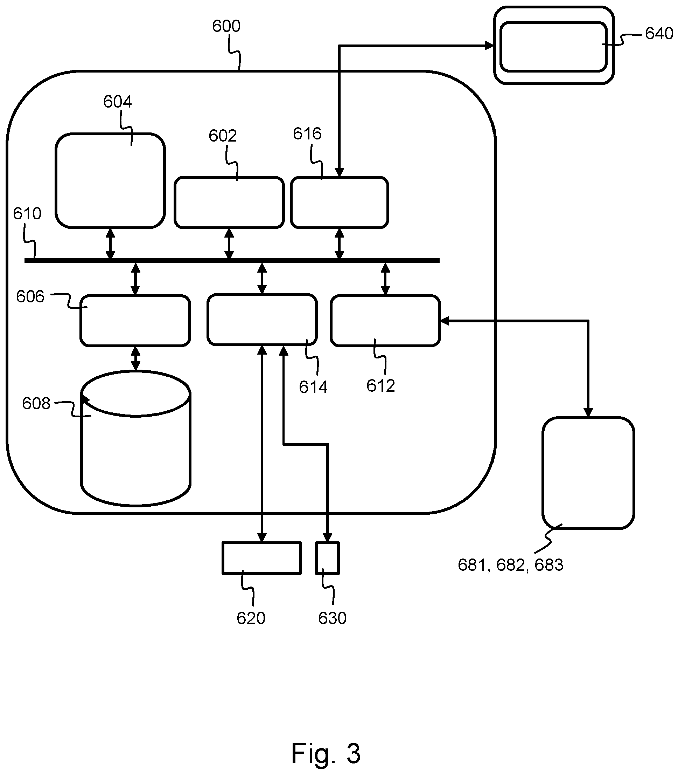

Fig. 3 shows a suitable computing system 600 enabling to implement embodiments of the method for improving blocking effect avoidance in a wireless access node according to the invention. Computing system 600 may in general be formed as a suitable general-purpose computer and comprise a bus 610, a processor 602, a local memory 604, one or more optional input interfaces 614, one or more optional output interfaces 616, a communication interface 612, a storage element interface 606, and one or more storage elements 608. Bus 610 may comprise one or more conductors that permit communication among the components of the computing system 600. Processor 602 may include any type of conventional processor or microprocessor that interprets and executes programming instructions. Local memory 604 may include a random-access memory (RAM) or another type of dynamic storage device that stores information and instructions for execution by processor 602 and/or a read only memory (ROM) or another type of static storage device that stores static information and instructions for use by processor 602. Input interface 614 may comprise one or more conventional mechanisms that permit an operator or user to input information to the computing device 600, such as a keyboard 620, a mouse 630, a pen, voice recognition and/or biometric mechanisms, a camera, etc. Output interface 616 may comprise one or more conventional mechanisms that output information to the operator or user, such as a display 640, etc. Communication interface 612 may comprise any transceiver-like mechanism such as for example one or more Ethernet interfaces that enables computing system 600 to communicate with other devices and/or systems, for example with other computing devices 681, 682, 683. The communication interface 612 of computing system 600 may be connected to such another computing system by means of a local area network (LAN) or a wide area network (WAN) such as for example the internet. Storage element interface 606 may comprise a storage interface such as for example a Serial Advanced Technology Attachment (SATA) interface or a Small Computer System Interface (SCSI) for connecting bus 610 to one or more storage elements 608, such as one or more local disks, for example SATA disk drives, and control the reading and writing of data to and/or from these storage elements 608. Although the storage element(s) 608 above is/are described as a local disk, in general any other suitable computer-readable media such as a removable magnetic disk, optical storage media such as a CD or DVD, - ROM disk, solid state drives, flash memory cards, ... could be used.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A safety zoning system for establishing a secured access for personnel (30) entering a primary safety zone of multiple safety zones (100) of an automated warehouse by messaging at least one automated material handling system (10,12) to halt automated operation in the at least primary safety zone and in adjacent safety zones to said primary safety zone in which said automated material handling system may pose a risk to said personnel in case of continued operation, the safety zoning system comprising:
- at least one access control module (20) associated with said one of multiple safety zones (100) configured to monitor an entry event of said personnel (30) into said safety zone (100), and configured to communicate with a zoning safety module (200) upon detection of such an entry event,
- an access consolidation module (300) configured:
∘ to store safety zone definitions (310) for said multiple safety zones, said safety zone definitions comprising
▪ information regarding physical associations of access control modules with said safety zones and
▪ information regarding interaction risks of said automated material handling systems when operating in said primary safety zone on personnel safety in said adjacent safety zones,
∘ to respond to queries requesting said safety zone configuration data,
- a zoning safety module (200), configured to
∘ communicate with said access control module (20),
∘ query said access consolidation module (300) for said safety zone definitions (310) to identify a primary safety zone which is entered by said personnel (30) based on said entry event,
∘ messaging (210) at least one automated material handling system (10,12) to halt automated operation in at least said primary safety zone.

2. A safety zoning system according to Claim 1, wherein said zoning safety module is further configured to:
- query said access consolidation module (300) for said safety zone definitions (310) to identify interaction risks of said automated material handling system (10,12) between said primary safety zone and any of said multiple safety zones,
- messaging at least one automated material handling system to halt automated operation in said primary safety zone and any of said multiple safety zones wherein said interaction risks of said automated material handling system are identified.

3. A safety zoning system according to Claim 1 or 2, wherein said automated material handling system is an automated elevator, a robotic shuttle, or any other load handling device.

4. A safety zoning system according to Claim 1 or 2, wherein said access consolidation module comprises a configuration table linking said access control modules to said multiple safety zones.

5. A safety zoning system according to any of the preceding claims, wherein said access consolidation module comprises a risk table defining risk interactions between said multiple safety zones.

6. A safety zoning system according to any of the preceding Claims 2-4, wherein said access consolidation module recalculates the risk table based on a warehouse wide risk parameter.

7. Method for establishing a secured access for personnel (30) entering a primary safety zone of multiple safety zones (100) of an automated warehouse by messaging at least one automated material handling system (10,12) to halt automated operation in the at least primary safety zone and in adjacent safety zones to said primary safety zone in which said automated material handling system may pose a risk to said personnel in case of continued operation, the method comprising the steps of:
- monitoring an entry event of said personnel (30) into said safety zone (100) by means of at least one access control module (20) associated with said one of multiple safety zones (100),
- communicating by said access control module (20) with a zoning safety module (200) upon detection of such an entry event,
- querying by said zoning safety module (200) said access consolidation module (300) for said safety zone definitions (310) to identify a primary safety zone which is entered by said personnel (30) based on said entry event,
- messaging (210) at least one automated material handling system (10,12) to halt automated operation in at least said primary safety zone.

8. Method according to claim 7, comprising the steps of:
- querying said access consolidation module (300) for said safety zone definitions (310) to identify interaction risks of said automated material handling system (10,12) between said primary safety zone and any of said multiple safety zones,
- messaging at least one automated material handling system to halt automated operation in said primary safety zone and any of said multiple safety zones wherein said interaction risks of said automated material handling system are identified.

9. A computer program product comprising instructions which, when the program is executed by a computing system (600), cause the computing system (600) to carry out the steps of the method of claim 7 or 8.

10. Computer readable medium comprising instructions which, when executed by a computing system (600), cause the computer to carry out the steps of the method of claim 7 or 8.
